# EUROPÄISCHE PATENTSCHRIFT

(11) **EP 0 631 163 B1**
(45) Veröffentlichungstag und Bekanntmachung des Hinweises auf die Patenterteilung: **01.09.1999**
(21) Anmeldenummer: 94106980.9
(22) Anmeldetag: 04.05.1994
(51) Int. Cl.: G02B 6/42, G02B 6/28

(54) **Bidirektionale optische Sende- und Empfangsanordnung**
Bidirectional optical transceiver
Emetteur-récepteur optique bidirectionnel

(30) Priorität: 17.05.1993 DE 4316492
(43) Veröffentlichungstag der Anmeldung: 28.12.1994
(73) Patentinhaber: SIEMENS AKTIENGESELLSCHAFT, 80333 München (DE)
(72) Erfinder: Karstensen, Holger, Dr., D-85662 Hohenbrunn (DE)

(56) Entgegenhaltungen:
- EP-A- 0 238 977
- PATENT ABSTRACTS OF JAPAN vol. 8, no. 157 (P-288) (1594) 20. Juli 1980 & JP-A-59 055 408 (FUJITSU)
- PATENT ABSTRACTS OF JAPAN vol. 9, no. 195 (P-379) (1918) 13. August 1985 & JP-A-60 060 604 (TOUYOU DENSOU)
- PATENT ABSTRACTS OF JAPAN vol. 14, no. 283 (P-1063) (4226) 19. Juni 1990 & JP-A-02 084 605 (NIPPON DENSO)

## Beschreibung

Die Erfindung betrifft eine bidirektionale optische Sende- und Empfangsanordnung.

Aus EP 0 238 977 ist eine bidirektionale optische Sende- und Empfangsanordnung bekannt, die einen optischen Sender mit einem Senderfenster zum Aussenden einer optischen Strahlung einer ersten Wellenlänge, einen optischen Empfänger mit einem Empfängerfenster zum Empfang einer optischen Strahlung einer zweiten Wellenlänge, die von einem bestimmten Raumpunkt ausgeht, der sowohl vom Senderfenster als auch vom Empfängerfenster (20) entfernt ist, und ein wellenlängenselektives optisches Filter aufweist, das für die erste Wellenlänge undurchlässig und nur für die zweite Wellenlänge durchlässig ist.

Das Filter ist auf einer planen Fläche eines transparenten plattenförmigen Substrats aufgebracht.

Zwischen dem Sender und dem Substrat mit dem Filter ist eine erste Kugellinse und zwischen dem Substrat mit dem Filter und dem bestimmten Raumpunkt ist eine zweite Kugellinse angeordnet. Beide Linsen bilden ein optisches Abbildungssystem, welches das Senderfenster unter Durchgang der Strahlung der von diesem Fenster ausgehenden Strahlung der ersten Wellenlänge durch die erste Linse, das Substrat und das Filter und durch die zweite Linse auf den Raumpunkt abbildet.

Der Raumpunkt wird von der zweiten Linse unter Durchgang der von diesem Punkt ausgehenden Strahlung der zweiten Wellenlänge und Reflexion dieser Strahlung an dem schräg zu einem Achsstrahl sowohl der Strahlung der ersten Wellenlänge als auch der Strahlung der zweiten Wellenlänge angeordneten Filter auf das Empfängerfenster abgebildet.

Aus JP 60-60604 A geht eine optische Sendeanordnung hervor, die einen optischen Sender mit einem Senderfenster zum Aussenden einer optischen Strahlung einer ersten Wellenlänge, einen anderen optischen Sender mit einem Senderfenster zum Aussenden einer optischen Strahlung einer zweiten Wellenlänge und eine optischen Linsenanordnung zum optischen Abbilden des Senderfensters jedes der beiden Sender auf einen gemeinsamen bestimmten Raumpunkt aufweist.

Diese Linsenanordnung besteht aus zwei plankonvexen Linsen mit je einer planen Linsenfläche, wobei die planen Linsenflächen einander gegenüberliegend und parallel zueinander angeordnet sind, und zwischen diesen beiden Flächen ist ein optisches Filter in Form eines dichroitischen Spiegels ausgebildet.

Die beiden Sender sind relativ zueinander so angeordnet, daß sich ein Achsstrahl der vom einen Sender abgestrahlten Strahlung der ersten Wellenlänge und ein Achsstrahl der vom anderen Sender abgestrahlten Strahlung der zweiten Wellenlänge senkrecht kreuzen.

Im Kreuzungspunkt dieser beiden Achsstrahlen ist das optische Filter so angeordnet, daß die plane Linsenfläche jeder plankonvexen Linse schräg im Winkel von 45° zu jedem dieser Achsstrahlen sowie senkrecht zu einer von diesen Achsstrahlen aufgespannten Ebene stehen.

Aufgrund dieser Anordnung weist eine der beiden plankonvexen Linsen eine sphärisch konvexe Linsenfläche auf, die gleichzeitig einem dem Senderfenster eines der beiden Sender und dem bestimmten Raumpunkt zugekehrt ist, während die andere plankonvexe Linse eine sphärisch konvexe Linsenfläche aufweist, die nur dem Senderfenster des anderen Senders und nicht dem bestimmten Raumpunkt zugekehrt ist.

Das Filter wirkt dabei so, daß es für die Wellenlänge der Strahlung des einen Senders undurchlässig ist, der das Senderfenster aufweist, dem die konvexe Linsenfläche der einen plankonvexen Linse zugekehrt ist, und nur für die Wellenlänge der Strahlung des anderen Senders durchlässig ist, der das Senderfenster aufweist, dem die konvexe Linsenfläche der anderen plankonvexen Linse allein zugekehrt ist.

Die optische Abbildung des Senderfensters des einen Senders auf den bestimmten Raumpunkt wird durch die eine plankonvexe Linse und das Filter so erzeugt, daß die von diesem Senderfenster ausgesandte Strahlung in diese Linse durch deren konvexe Linsenfläche eintritt, am Filter um 90° in Richtung zum bestimmten Raumpunkt umgelenkt wird und die umgelenkte Strahlung aus der gleichen konvexen Linsenfläche dieser einen Linse in Richtung zum bestimmten Raumpunkt austritt.

Die optische Abbildung des Senderfensters des anderen Senders auf den bestimmten Raumpunkt wird durch beide plankonvexen Linsen und das Filter so erzeugt, daß die von diesem Senderfenster ausgesandte Strahlung in Richtung zum bestimmten Raumpunkt in die andere plankonvexe Linse durch deren konvexe Linsenfläche eintritt, aus dieser Linse in das Filter austritt und durch das Filter hindurch in die eine plankonvexe Linse im wesentlichen unabgelenkt eintritt, und die unabgelenkte Strahlung aus der konvexen Linsenfläche der einen plankonvexen Linse in Richtung zum bestimmten Raumpunkt austritt.

Aus JP 59-55408 A geht eine optische Sendeanordnung hervor, die einen optischen Sender mit einem Senderfenster zum Aussenden einer optischen Strahlung einer ersten Wellenlänge, einen anderen optischen Sender mit einem Senderfenster zum Aussenden einer optischen Strahlung einer zweiten Wellenlänge und eine optischen Linsenanordnung zum optischen Abbilden des Senderfensters jedes der beiden Sender auf einen bestimmten Raumpunkt aufweist.

Die Linsenanordnung besteht aus einer stabförmigen Linse, die an einem dem bestimmten Raumpunkt gegenüberliegenden Ende eine sphärisch konvexe Linsenfläche und an einem von diesem Ende abgekehrten und dem Senderfenster eines der beiden Sender gegenüberliegenden Ende eine plane Linsenfläche aufweist.

Die plane Linsenfläche ist schräg zu einem auf den bestimmten Raumpunkt gerichteten Achsstrahl der vom Senderfenster ausgesandten Strahlung dieses einen Senders angeordnet und weist ein optisches Filter auf das für die Wellenlänge dieser Strahlung durchlässig ist, nicht aber für die von dieser Wellenlänge verschiedene andere Wellenlänge der Strahlung des anderen Senders.

Die Strahlung des einen Senders koppelt durch das Filter hindurch in die stabförmigen Linse ein.

Der andere Sender ist relativ zur stabförmigen Linse so angeordnet, daß die vom Senderfenster dieses anderen Senders ausgesandte Strahlung der anderen Wellenlänge derart schräg durch eine zwischen der konvexen und planen Linsenfläche angeordnete zylindrische Mantelfläche der stabförmigen Linse in diese Linse einkoppelt, daß diese eingekoppelte Strahlung schräg auf das optische Filter auf der planen Linsenfläche dieser Linse fällt und dort durch Reflexion in Richtung zum bestimmten Raumpunkt umgelenkt wird.

Die optische Abbildung des Senderfensters sowohl des einen als auch anderen Senders auf den bestimmten Raumpunkt wird durch die konvexe Linsenfläche der stabförmigen Linse bewirkt, aus der die in diese Linse eingekoppelte Strahlung sowohl des einen als auch anderen Senders aus der Linse auskoppelt und sich zum bestimmten Raumpunkt ausbreitet.

Der Erfindung liegt die Aufgabe zugrunde, eine im Vergleich zur bekannten bidirektionalen optischen Sende- und Empfangsanordnung baulich kompakter realisierbare Anordnung dieser Art anzugeben.

Diese Aufgabe wird durch eine Anordnung gelöst, welche die im Anspruch 1 angegebenen Merkmale aufweist.

Bevorzugte und vorteilhafte Ausgestaltungen der erfindungsgemäßen Anordnung gehen aus den Unteransprüchen hervor.

Die erfindungsgemäße Anordnung ist vorteilhaft für Teilnehmeranschluß-Netze verwendbar.

Die Erfindung wird in der nachfolgenden Beschreibung anhand der Figuren beispielhaft näher erläutert. Es zeigen:
- Figur 1: eine maßstäbliche schematische Darstellung eines Ausführungsbeispiels der Erfindung,
- Figur 2: in schematischer Darstellung eine Variante der Anordnung nach Figur 1,
- Figur 3: in maßstäblicher Darstellung einen Schnitt durch einen vollständigen bidirektinalen Modul mit einem weiteren Ausführungsbeispiel der erfindungsgemäßen Anordnung,
- Figur 4: in perspektivischer schematischer Darstellung ein Array aus erfindungsgemäßen Anordnungen.

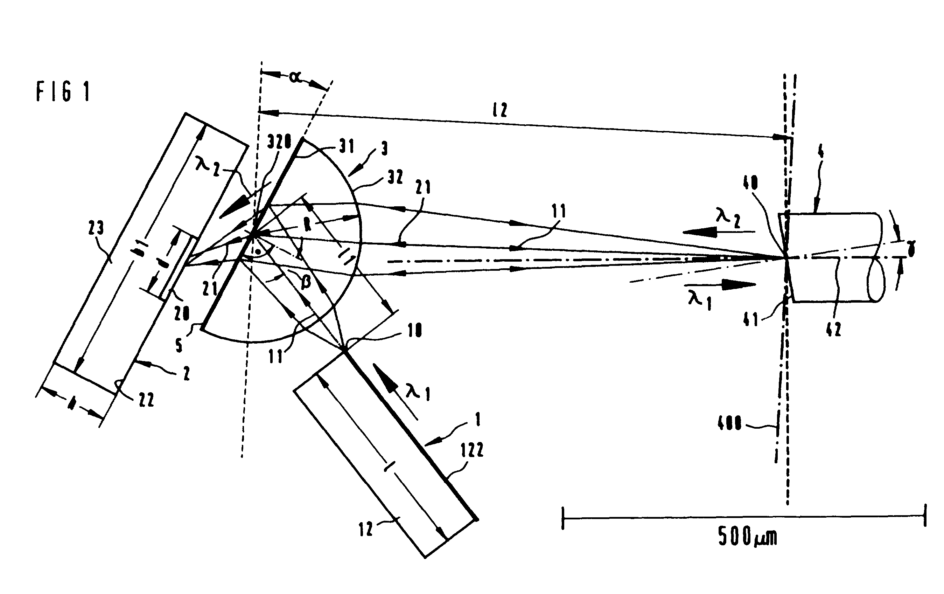

Jedes der in den Figuren 1 bis 4 dargestellten Ausführungsbeispiele weist mindestens den optischen Sender 1 mit dem Senderfenster 10 zum aussenden der optischen Strahlung der ersten Wellenlänge λ₁, den optischen Empfänger 2 mit dem Empfängerfenster 20 zum Empfang der optischen Strahlung der zweiten Wellenlänge λ₂, die Linse 3 mit der planen Linsenfläche 31 und der konvexen Linsenfläche 32, und das auf der planen Linsenfläche 31 angeordnete optische Filter 5 auf, wobei diesen Elementen gemeinsam der vom Senderfenster 10 und Empfängerfenster 20 entfernte bestimmte Raumpunkt 40 zugeordnet ist.

Der Sender 1 besteht vorzugsweise aus einer Laserdiode mit einem auf einer Oberfläche 121 eines Substrats 12 integrierten und ein laserfähiges Material enthaltenden streifenartigen optischen Wellenleiter 122. Der Wellenleiter 122 weist eine der Linse 3 zugekehrte stirnseitige Endfläche 10 auf, aus der die Laserstrahlung der ersten Wellenlänge λ₁ austritt und die das Senderfenster definiert.

Der Empfänger 2 ist beispielsweise eine Photodiode mit einem für die Strahlung der zweiten Wellenlänge λ₂ empfindlichen Bereich 20, der unter oder auf einer Oberfläche 22 eines Substrats 23 ausgebildet ist und das Empfängerfenster definiert.

Die plankonvexe Linse 3 ist vorzugsweise eine Halbkugellinse, d.h. eine Linse mit einer planen brechenden Linsenfläche 31 und einer konvexen brechenden Linsenfläche 32 in Form einer Halbkugelfläche, deren Mittelpunkt 320 im wesentlichen auf der planen Linsenfläche 31 liegt.

Das Filter 5 ist vorzugsweise eine dielektische Vielfachschicht, die beispielsweise durch Aufdampfen dielektrischer Schichten auf die plane Linsenfläche 31 hergestellt werden kann und deren Filterkennlinie gleich der eines Kantenfilters ist, das für die Strahlung der ersten Wellenlänge λ₁ im wesentlichen undurchlässig und für die Strahlung der zweiten Wellenlänge λ₂ im wesentlichen vollständig durchlässig ist. Dieses Filter 5 bewirkt, daß die plane Linsenfläche 31 für die Strahlung der ersten Wellenlänge λ₁ ein idealer Reflektor und für die Strahlung der zweiten Wellenlänge λ₂ eine entspiegelte Fläche ist.

Der Raumpunkt 40 ist nicht als mathematischer Punkt zu verstehen, sondern als ein bestimmter kleiner Raumbereich, dessen Abmessungen beispielsweise in der Größenordnung des Senderfensters 10 und/oder des Empfängerfensters 20 liegen. Beispielsweise ist der Raumpunkt 40 durch eine stirnseitige Endfläche eines Kerns einer optischen Monomodefaser 4 definiert, dessen Durchmesser typisch bei 5 µm liegt.

Bei allen Ausführungsbeispielen ist es zweckmäßigerweise aber nicht notwendig so eingerichtet, daß der Achsstrahl 11 der vom Senderfenster 10 divergent ausgehenden Laserstrahlung der ersten Wellenlänge λ₁ senkrecht auf die halbkugelförmige brechende Linsenfläche 32 trifft. Dies bewirkt, daß der Achsstrahl 11 ungebrochen, d.h. unabgelenkt, in die Linse 3 eintritt und deren plane Linsenfläche 31 schräg in einem vorbestimmten Einfallswinkel β sowie im Mittelpunkt 320 der halbkugelfförmigen Linsenfläche 32 trifft. Aufgrund der Tatsache, daß die plane Linsenflächen 31 für diese Laserstrahlung ein idealer Reflektor ist, wirkt die halbkugelförmige plankonvexe Linse 3 optisch wie eine Vollkugellinse. Dies bedeutet, daß der reflektierte Achsstrahl 11 senkrecht auf die halbkugelförmige konvexe Linsenfläche 32 trifft, so daß er ungebrochen, d.h. unabgelenkt, aus der Linse 3 austritt, und daß das Senderfenster 10 in einer zugeordneten Bildebene 400 auf dem reflektierten Achsstrahl 11 abgebildet wird. Vorzugsweise in dieser Bildebene 400 wird der Raumpunkt 40 so angeordnet, daß er vom Achsstrahl 11 getroffen wird.

Die von diesem Raumpunkt 40 divergent ausgehende Strahlung der zweiten Wellenlänge λ₂ wird zweckmäßigerweise so auf die Linse 3 gerichtet, daß ein Achsstrahl 21 dieser Strahlung die kugelförmige konvexe Linsenfläche 32 senkrecht trifft, so daß dieser Achsstrahl 21 ungebrochen, d.h. unabgelenkt, in die Linse 3 eintritt und die plane Linsenfläche 31 im Mittelpunkt 320 der halbkugelförmigen Linsenfläche 32 trifft. Da das Filter 5 für diese Strahlung entspiegelnd wirkt, tritt diese Strahlung an dieser planen Fläche 31 im wesentlichen vollständig aus der Linse 3 aus. Eine gewisse Reflexion dieser Strahlung an der planen Fläche 31 ist nicht allzu störend, sie hat nur den Effekt einer Zusatzdämpfung, da die Strahlung der zweiten Wellenlänge λ₂ die Laserdiode 1 kaum beeinflußt.

Die Linse 2 wirkt in Bezug auf die Strahlung der zweiten Wellenlänge λ₂ wie eine Plankonvexlinse, welche den Raumpunkt 40 in einer zugeordneten, nicht dargestellten Bildebene auf dem aus der planen Linsenfläche 31 ausgetretenen Achsstrahl 21 abbildet. In dieser Bildebene wird vorzugsweise das Empfängerfenster 20 so angeordnet, daß es vom ausgetretenen Achsstrahl 21 getroffen wird. Die Ebene 22, in der das Empfängerfenster 20 angeordnet ist, kann zur Bildebene, in der das Empfängerfenster 20 anzuordnen ist, verkippt sein.

Die durch die plane Linsenfläche 31 hindurchgehende Strahlung der zweiten Wellenlänge λ₂ wird in Abhängigkeit von der Differenz zwischen der Brechzahl des Materials der Linse 3 und der Brechzahl des an das Filter 5 angrenzenden Mediums gebrochen.

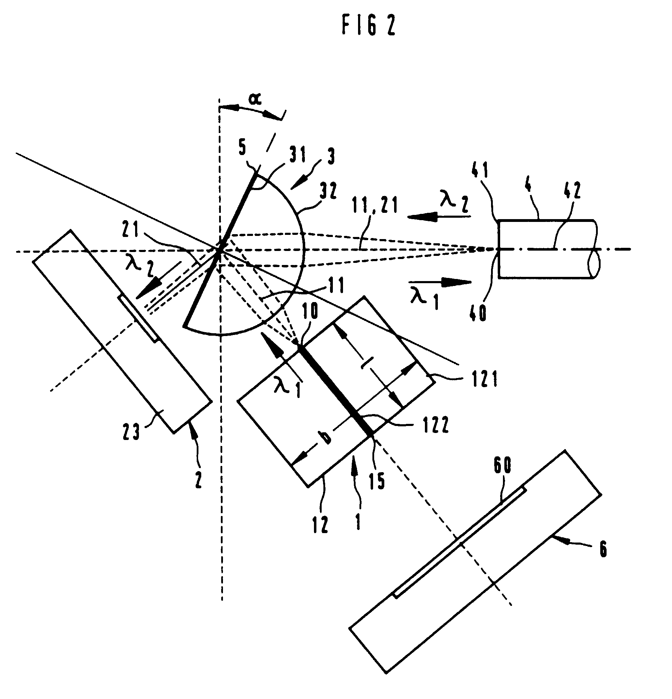

Die nicht so guten Abbildungseigenschaften einer Plankonvexlinse mit der konvexen Seite zum Objekt und die sich aus der Neigung der Linse gegen die optische Achse zusätzlich ergebenden Abbildungsfehler stören in dem Fall, bei dem der Raumpunkt 40 durch den Kern einer Monomodefaser 4 definiert ist, wenig, da die optische Abbildung einer Monomodefaser auf eine Photodiode schon wegen des relativ großen Photodiodenfensters nicht kritisch ist. Durch die Brechung der Strahlung der zweiten Wellenlänge λ₂ an der planen Linsenfläche 31, die relativ zum zugeführten Achsstrahl 21 bzw. zum reflektierten Achsstrahl 11 geneigt ist, ergeben sich Einschränkungen für den maximalen Neigungswinkel. Je höher die Brechzahl der Linse zum umgebenden Medium ist, desto höher ist auch die Brechung. D. h. je besser die Kopplung zwischen der Laserdiode 1 und der Faser 4 sein muß, um so größer muß diese Brechzahl gewählt werden und um so geringer kann der maximale Neigungswinkel der planen Linsenfläche 31 sein. Bei geeigneter Wahl aller Parameter können aber vollauf befriedigende Ergebnisse erzielt werden. In den Figuren 1 und 2 ist der Neigungswinkel α der planen Linsenfläche 31 auf eine Ebene bezogen, die senkrecht auf dem vom Raumpunkt 40 zugeführten Achsstrahl 21 bzw. dem reflektierten Achsstrahl 11 steht.

Bei einer konkreten Ausführung des Beispiels nach Figur 1 hat die Linse 3 eine Brechzahl n = 1,75 und die halbkugelförmige konvexe Fläche 32 einen Radius R = 150 µm. Die Brennweite dieser Linse 3 beträgt für die Strahlung der zweiten Wellenlänge λ₂, für die sie als Plankonvexlinse wirkt, 200 µm und für die Strahlung der ersten Wellenlänge λ₁, für die sie als Kugellinse wirkt, 175 µm. Der Neigungswinkel α ist 25° gewählt. Die erste Wellenlänge λ₁ beträgt 1,3 µm und der Radius des Senderfensters 10, der gleich dem Fleckradius der Laserdiode ist, beträgt etwa 1 µm. Die Länge 1 des streifenartigen optischen Wellenleiters 122 der Laserdiode 1, d.h. die Kanallänge dieser Diode, beträgt 300 µm und die Breite b (siehe Figur 2) der Diode 1 beträgt ebenfalls 300 µm.

Die Photodiode 2 hat eine das Empfängerfenster 20 definierende, für die Strahlung der zweiten Wellenlänge λ₂ empfindliche Fläche mit einem Durchmesser d von 100 µm, eine Breite b₁ von 400 µm und eine Höhe h von 100 µm.

Der Abstand l₁ des Senderfensters 10 vom Mittelpunkt 320 der halbkugelförmigen konvexen Fläche 32 beträgt 210 µm und der Abstand l₂ dieses Mittelpunktes 320 von der Bildebene 400 beträgt 750 µm.

Die Faser 4 ist eine Standard-Monomodefaser mit einem Durchmesser von 125 µm und einer Fleckweite von 5 µm bei λ₁ = 1,3 µm. Die der Linse 3 zugekehrte stirnseitige Endfläche 41 der Faser 4 ist zur Vermeidung einer Endflächenreflexion etwas zur Achse 42 der Faser 4 geneigt, und zwar so, daß die Flächennormale der stirnseitigen Endfläche 41 mit der Achse 42 der Faser 4 einen Winkel γ = 7° einschließt, der für eine genügende Unterdrückung der Endflächenreflexion ausreichend ist.

Der Raumpunkt 40 ist durch den auf den nicht dargestellten Kern der Faser 4 entfallenden Flächenanteil der Endfläche 41 definiert. Aufgrund der Schrägstellung der stirnseitigen Endfläche 41 müssen die Achse 42 der Faser 4 und die Achsstrahlen 11, 21 in einem Winkel δ zueinander stehen, der 3,2° beträgt. Der in der Figur 1 angegebene Maßstab für die horizontale Richtung gilt auch für die vertikale Richtung.

Die Anordnung nach Figur 1 weist die Besonderheit auf, daß die Oberfläche 121 des Substrats 12 der Laserdiode 1 senkrecht zu der von dem vom Senderfenster 10 ausgehenden an der planen Linsenfläche 31 reflektierten und zum Raumpunkt 40 gelangenden Achsstrahl 11 der ersten Wellenlänge λ₁ definierten Ebene, die in der Figur 1 die Zeichenebene ist, angeordnet ist, und daß die durch die Oberfläche 22 des Substrats 23 der Photodiode 2 definierte Ebene, in der das Empfängerfenster 20 angeordnet ist, parallel zu der zur Zeichenebene senkrechten planen Linsenfläche 31 angeordnet ist. Diese Besonderheit hat Vorteile für den Aufbau, da die Laserdiode 1 und die Photodiode 2 weit auseinanderliegen.

Die in Figur 2 vereinfacht dargestellte Variante der Anordnung nach Figur 1 unterscheidet sich von der Anordnung nach Figur 1 dadurch, daß die Oberfläche 121 des Substrats 12 der Laserdiode 1 parallel zu der von dem vom Senderfenster 10 ausgehenden und an der planen Linsenfläche 31 reflektierten und zum Raumpunkt 40 gelangenden Achsstrahl 11 der ersten Wellenlänge λ₁ definierten Ebene, d.h. parallel zur Zeichenebene angeordnet ist, und daß die senkrecht zu dieser Zeichenebene stehende Oberfläche 22 des Substrats 23 der Photodiode 2 schräg im Winkel zur planen Linsenfläche 31 angeordnet ist. Außerdem liegt die nicht notwendige Besonderheit vor, daß die Oberfläche 22 senkrecht zu dem durch die Linse 3 hindurchgegangenen Achsstrahl 21 der zweiten Wellenlänge λ₂ angeordnet ist. Der Einfachheit halber ist die in Wirklichkeit schräge stirnseitige Endfläche 41 der Faser 4 nicht schräg zu deren Achse 42 dargestellt.

Die Figur 2 zeigt auch eine Monitordiode 6, die bei der Anordnung nach Figur 1 ebenfalls vorhanden ist, aber in dieser Figur der Einfachheit halber fortgelassen ist. Diese Monitordiode, die zur Überwachung der Laserdiode 1 dient, weist einen lichtempfindlichen Bereich 60 auf, der Strahlung der ersten Wellenlänge λ₁ aus der Laserdiode 1 empfängt. Diese Strahlung tritt aus der vom Senderfenster 10 abgekehrten stirnseitigen Endfläche 15 des streifenartigen Wellenleiters 122 der Laserdiode 121 aus.

Aufbautechnisch kann es sehr vorteilhaft sein, den Sender 1 und die Linse 3 oder den Empfänger 2 und die Linse 3 als Subbaugruppe zu realisieren. Dies gilt sowohl für die Anordnung nach Figur 1 als auch für die Variante nach Figur 2. Insbesondere ist eine Subbaugruppe aus Empfänger 2 und Linse 3 vorteilhaft, da diese beiden Komponenten relativ unempfindlich sind und aus diesem Grunde bei der Herstellung dieser Subbaugruppe mit nur wenig Ausfall zu rechnen ist. Auch ist die erforderliche Montagegenauigkeit der beiden Komponenten zueinander unkritisch.

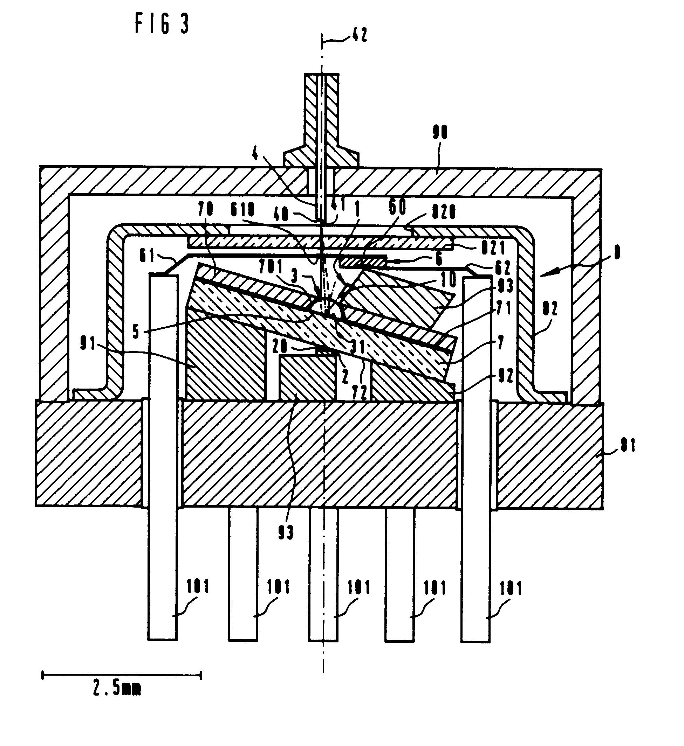

Bei dem in Figur 3 maßstäblich in einem in Bezug auf die Achse 42 der Faser 4 längsaxialen Schnitt gezeigten Modul ist die Linse 3 derart auf einer für die Strahlung der zweiten Wellenlänge λ₂ transparenten Platte 7 befestigt, daß die plane Linsenfläche 31 einer planen Fläche 71 dieser Platte 7 zugekehrt ist und sich das Filter 5 zwischen dieser planen Fläche 71 der Platte 7 und der planen Linsenfläche 31 befindet, und daß der Empfänger 2 gegenüber einer von der einen planen Fläche 71 der Platte 7 abgekehrten anderen planen Fläche 72 dieser Platte 7 derart angeordnet ist, daß die durch die plane Linsenfläche 31, das Filter 5 und die transparente Platte 7 hindurchgegangene und aus der anderen planen Fläche 72 dieser Platte 7 austretende Strahlung der zweiten Wellenlänge λ₂ in das Empfängerfenster 20 des Empfängers 2 gelangt.

Die Platte 7 ist durch zwei im Abstand voneinander angeordnete Sockel 91, 92, vorzugsweise aus Metall, derart auf einem Gehäuseboden 81 eines Gehäuses 8 abgestützt, daß die andere plane Fläche 72 der Platte 7 dem vorzugsweise metallenen Gehäuseboden 81 zugekehrt und in einem Abstand zu diesem Boden 81 angeordnet ist. Der Empfänger 2 ist zwischen den Sockeln 91 und 92 auf dem Gehäuseboden 81 durch einen vorzugsweise metallenen Sockel 93 abgestützt und zwischen dem Gehäuseboden 81 und der Platte 7 angeordnet. Der Sender 1 ist auf der einen vom Gehäuseboden 81 abgekehrten planen Fläche 71 der Platte 7 durch einen vorzugsweise metallenen Sockel 93 abgestützt. Dieser Sockel 93 ist auf einer zweiten Platte 70 befestigt, die auf der Platte 7 aufgebracht ist und eine Öffnung aufweist, in der die Linse 3 angeordnet ist. Der Sender 1 und die Linse 3 bilden im vorliegenden Fall eine Subbaueinheit.

Die Platte 7, die Linse 3, das Filter 5, der Sender 1 und der Empfänger 2 sind von einer mit dem Gehäuseboden 81 fest oder lösbar verbundenen kappenförmigen Gehäuseabdeckung 82 des Gehäuses 8 abgedeckt, die vorzugsweise aus Metall besteht. Die Gehäuseabdeckung 82 weist eine Fensteröffnung 820 zum ungestörten Durchgang der Strahlung der ersten Wellenlänge λ₁ und der zweiten Wellenlänge λ₂ auf.

Die Faser 4 ist in einem Flansch 90 gehaltert, der am Gehäuseboden 81 anliegt, die stirnseitige Endfläche 41 der Faser 42 im Bereich der Fensteröffnung 820 der Gehäuseabdeckung 82 derart hält, daß das Senderfenster 10 über die Linse 3 durch die Strahlung der ersten Wellenlänge λ₁ im Bereich des den Raumpunkt 40 definierenden Kerns der Faser 4 auf die stirnseitige Endfläche 41 abgebildet ist und daß der Raumpunkt 40 über die Linse 3 durch die Strahlung der zweiten Wellenlänge λ₂ auf das Empfängerfenster 20 des Empfängers 2 abgebildet ist. Mit 101 sind stiftförmige elektrische Anschlüsse bezeichnet, die durch den Gehäuseboden 81 in das Innere des Gehäuses 8 ragen und zur elektrischen Kontaktierung von elektrischen Schaltungen und Komponenten im Inneren des Gehäuses dienen. Dazu gehört auch die Monitordiode 6 mit dem lichtempfindlichen Bereich 60, die durch mit zwei Anschlüssen 101 verbundene Kontaktstreifen 61 und 62 gehaltert ist, von denen der Kontaktstreifen 61 eine Fensteröffnung 610 für einen ungestörten Durchgang der Strahlung der ersten Wellenlänge λ₁ und der zweiten Wellenlänge λ₂ aufweist.

Um das Eindringen von Fremdkörpern in das Innere des Gehäuses 8 durch die Fensteröffnung 820 der Gehäuseabdeckung 82 zu vermeiden, ist die Fensteröffnung 820 durch eine für die Strahlung der ersten Wellenlänge λ₁ und die Strahlung der zweiten Wellenlänge λ₂ transparente Platte 821 verschlossen, die vorzugsweise entspiegelt ist.

Bei einer konkreten Ausführung ist die Linse 3 aus einem Material mit der Brechzahl n = 1,75 gefertigt. Der Radius der kugelförmig konvexen Fläche 32 der Linse 3 beträgt 350 µm. Dies entspricht einer Brennweite von 333 µm für die Strahlung der zweiten Wellenlänge λ₂ = 1,55 µm und einer Brennweite von 292 µm für die Strahlung der ersten Wellenlänge λ₁ = 1,3 µm. Der Winkel α ist bei der Anordnung nach Figur 3 gleich 20° gewählt. Die Abmessungen der Laserdiode 1 sind die gleichen wie bei der Anordnung nach Figur 1. Die Abmessungen der Photodiode 2 unterscheiden sich von denen der Anordnung nach Figur 1 nur durch die andere Breite b₁ von 250 µm. Die Faser 4 ist mit der Faser 4 nach Figur 1 identisch. Die Platte 7 und zweite Platte 70 bestehen aus Silizium.

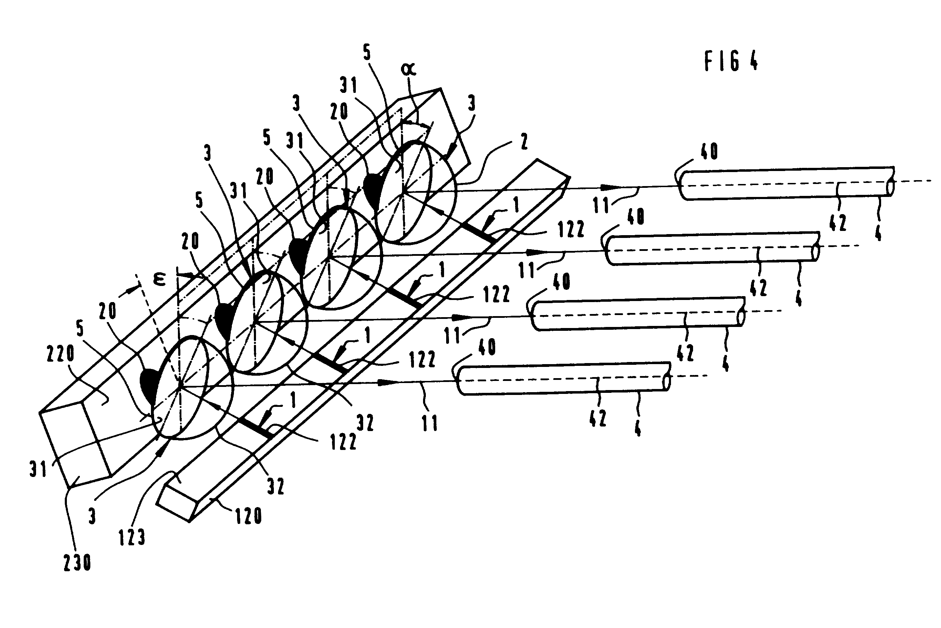

Die Anschlüsse 101, von denen insgesamt acht vorgesehen und in der Figur 4 nur fünf zu sehen sind, und die um die Achse 42 der Faser 4 herum angeordnet sind, sind so gelegt, daß eine möglichst gute HF-Abschirmung zwischen Sender 1, Empfänger 2 und Monitordiode 6 erzielt wird. Dazu sind drei Anschlüsse an Masse und ein weiterer an eine Vorspannung des Empfängers 2 gelegt, die HF-mäßig ebenfalls an Masse liegt.

Der Modul nach Figur 3 erlaubt eine nahezu vollständige metallische Kapselung des Empfängers 2 und damit eine sehr gute elektrische Abschirmung des Empfangsteils. Durch eine geschickte angelegte Metallisierung der zweiten Platte 70 kann optisches Nebensprechen zwischen Sender 1 und Empfänger 2 nahezu vollständig unterdrückt werden. Der in der Figur 3 angegebene Maßstab für die horizontale Richtung gilt auch für die vertikale Richtung.

Das in Figur 4 dargestellte Array aus erfindungsgemäßen Anordnungen ist mit Anordnungen aufgebaut, bei denen die streifenartigen Wellenleiter 122 der Laserdioden 1 in einer Ebene 123 angeordnet sind, die ähnlich wie die Oberfläche 121 des Substrats 12 der Laserdiode 1 der Anordnung nach Figur 1 senkrecht zur Ebene des vom Senderfenster 10 ausgehenden und von der planen Linsenfläche 31 der Linse 3 reflektierten Achsstrahls 11 der ersten Wellenlänge λ₁ aufgespannten Ebene, die in der Figur 1 die Zeichenebene ist, steht. Die Laserdioden 1 können vorteilhafterweise als einfach herzustellendes zeilenförmiges Laserdiodenarray auf einer die Ebene 123 bildenden Oberflächen eines allen Dioden 1 gemeinsamen Substrats 120 ausgebildet sein.

Ähnlich können die Photodioden 2 vorteilhafterweise als einfach herzustellendes zeilenförmiges Photodiodenarray auf einer Oberfläche 220 eines allen Photodioden 2 gemeinsamen Substrats 230 ausgebildet sein. Die Oberfläche 220 bildet die Ebene, in der die Empfängerfenster 20 der Photodioden 2 angeordnet sind, wobei in der Figur 4 diese Ebene 220 beispielsweise schräg in einem Winkel ε zu einer Ebene geneigt ist, in der die planen Linsenflächen 31 sämtlicher Linsen 3 angeordnet sind. Der Achsstrahl 21 der zweiten Wellenlänge λ₂, der zwischen der planen Linsenfläche 31 und dem Raumpunkt 40 mit dem von der planen Linsenfläche 31 reflektierten und zum Raumpunkt 40 gelangenden Achsstrahl 11 zusammenfällt, ist in der Figur 4 der Einfachheit halber nicht gezeichnet. Auch die den einzelnen Anordnungen aus Laserdiode 1, Photodiode 2 und Linse 3 zugeordneten Fasern 4 können vorteilhafterweise in Form eines Faserarrays ausgebildet sind, bei dem die Fasern in einer gemeinsamen Ebene parallel nebeneinander angeordnet sind.

Die in den Ausführungsbeispielen verwendete Monomodefaser 4 kann auch eine Multimodefaser sein.

Anstelle der Halbkugellinse 3 kann auch eine plankonvexe Stablinse verwendet werden, bei welcher der Radius der konvexen Linsenfläche kleiner ist als die Länge des Stabes. Diese Linse darf nicht zu lang oder deren Brechzahl nicht zu hoch sein, da sonst der Brennpunkt der Linse und möglicherweise auch die Bildebene, auf die der bestimmte Raumpunkt durch die Strahlung der zweiten Wellenlänge λ₂ abgebildet wird, innerhalb der Linse liegt. Die Stablinse wirkt in Bezug auf die Strahlung der ersten Wellenlänge λ₁ wie eine bikonvexe Linse, in Bezug auf die Strahlung der zweiten Wellenlänge λ₂ wie eine dicke plankonvexe Linse.

Auch kann die Linse 3 eine dünne plankonvexe Linse sein, bei der die konvexe Linsenfläche keine Halbkugel, sondern nur eine Kugelkalotte ist. Die Dicke dieser Linse ist kleiner als der Radius der Kugelkalotte. Eine solche Linse wirkt in Bezug auf die Strahlung der ersten Wellenlänge λ₁ wie eine bikonvexe Linse, in Bezug auf die Strahlung der zweiten Wellenlänge λ₂ wie eine dünne plankonvexe Linse. Bei dieser Linse sind größere Brechzahlen möglich.

Eine erfindungsgemäße Anordnung benötigt, abgesehen von einem Monitorempfänger, vorteilhafterweise nur noch drei optische bzw. optoelektronische Komponenten: einen optischen Sender, eine plankonvexe Linse, deren plane Linsenfläche für eine der beiden Wellenlängen verspiegelt, für die andere durchlässig ist, und einen optischen Empfänger. Eine zweite Linse und ein separates Wellenlängenfilter samt deren Montage- und Justagekosten werden eingespart. Der Aufbau kann so komptakt ausgelegt werden, daß das gesamte Modul - bis auf die Faser bzw. einen Faserstecker - in einem TO- oder TO-ähnlichen Gehäuse untergebracht werden kann. Überdies ist die erfindungsgemäße Anordnung vorteilhafterweise arrayfähig, so daß mit der erfindungsgemäßen Anordnung auch mehrkanalige bidirektionale Module für Faserarrays realisiert werden können.

## Patentansprüche

1. Bidirektionale optische Sende- und Empfangsanordnung, bestehend aus
- einem optischen Sender (1) mit einem Senderfenster (10) zum Aussenden einer optischen Strahlung einer ersten Wellenlänge (λ₁),
- einem optischen Empfänger (2) mit einem Empfängerfenster (20) zum Empfang einer optischen Strahlung einer zweiten Wellenlänge (λ₂), die von einem bestimmten Raumpunkt (40) ausgeht, der sowohl vom Senderfenster (10) als auch vom Empfängerfenster (20) entfernt ist, und
- einer einzigen plankonvexen optischen Linse (3) mit einer sowohl dem Senderfenster (10) als auch dem bestimmten Raumpunkt (40) zugekehrten konvexen Linsenfläche (32) und einer dem Empfängerfenster (20) zugekehrten planen Linsenfläche (31), und
- einem auf der planen Linsenfläche (31) ausgebildeten wellenlängenselektiven optischen Filter (5), das für die erste Wellenlänge (λ₁) undurchlässig und nur für die zweite Wellenlänge (λ₂) durchlässig ist, wobei
der Sender (1), der bestimmten Raumpunkt (40), der Empfänger (2) und die Linse (3) derart relativ zueinander angeordnet sind und die Linse (3) so bemessen ist, daß
- das Senderfenster (10) allein von der Linse (3) unter Reflexion der Strahlung der ersten Wellenlänge (λ₁) an der planen Linsenfläche (31) auf den bestimmten Raumpunkt (40) abgebildet, und
- der bestimmte Raumpunkt (40) allein von der Linse (3) unter Durchgang der Strahlung der zweiten Wellenlänge (λ₂) durch die plane Linsenfläche (31) und das Filter (5) auf das Empfängerfenster (20) abgebildet ist.

2. Anordnung nach Anspruch 1, wobei
- die konvexe Linsenfläche (32) Teil einer Kugelfläche ist, deren Mittelpunkt (320) im wesentlichen in der planen Linsenfläche(31) liegt, und wobei
- der Sender (1), der Empfänger (2), die Linse (3) und der Raumpunkt (40) derart relativ zueinander angeordnet sind, daß ein Achsstrahl (11) der vom Senderfenster (10) ausgehenden Strahlung der ersten Wellenlänge (λ₁) und ein Achsstrahl (21) der vom Raumpunkt (40) ausgehenden Strahlung der zweiten Wellenlänge (λ₂) jeweils senkrecht auf die kugelförmige konvexe Linsenfläche (32) treffen.

3. Anordnung nach Anspruch 1 oder 2, wobei der optische Sender (1) aus einer Laserdiode mit einem auf einer Oberfläche (121) eines Substrats (12) integrierten und ein laserfähiges Material enthaltenden streifenartigen optischen Wellenleiter (122) besteht, der eine der Linse (3) zugekehrte und das Senderfenster (10) definierende stirnseitige Endfläche aufweist.

4. Anordnung nach Anspruch 3, wobei die Oberfläche (121) des Substrats (12) senkrecht zu einer den an der planen Linsenfläche (32) reflektierten Achsstrahl (11) der Strahlung der ersten Wellenlänge (λ₁) enthaltenden Ebene angeordnet ist.

5. Anordnung nach Anspruch 1 oder 2, wobei das Empfängerfenster (20) in einer Ebene (22) angeordnet ist, die zur planen Linsenfläche(31) parallel ist und auf die der an der planen Linsenfläche (31) gebrochene Achsstrahl (21) der Strahlung der zweiten Wellenlänge (λ₂) schräg einfällt.

6. Anordnung nach Anspruch 1 oder 2, wobei das Empfängerfenster (20) in einer Ebene (22) angeordnet ist, die zu einer den an der planen Linsenfläche (31) gebrochenen Achsstrahl (21) der Strahlung der zweiten Wellenlänge (λ₂) enthaltenden Ebene senkrecht steht.

7. Anordnung nach einem der vorhergehenden Ansprüche, wobei das Empfängerfenster (20) in einer Ebene (22) angeordnet ist, die schräg in einem Winkel zur planen Linsenfläche (31) steht und auf die der an der planen Linsenfläche (31) gebrochene Achsstrahl (21) der zweiten Wellenlänge (λ₂) schräg einfällt.

8. Anordnung nach einem der vorhergehenden Ansprüche, wobei die Linse (3) derart auf einer für die Strahlung der zweiten Wellenlänge (λ₂) transparenten Platte (7) befestigt ist, daß die plane Linsenfläche (31) einer planen Fläche (71) dieser Platte (7) zugekehrt ist und sich das Filter (5) zwischen dieser planen Fläche (71) der Platte (7) und der planen Linsenfläche (31) befindet, und daß der Empfänger (2) gegenüber einer von der einen planen Fläche (71) der Platte (7) abgekehrten anderen planen Fläche (72) der Platte (7) angeordnet ist.

9. Anordnung nach Anspruch 8, wobei die Platte (7) derart auf einem Gehäuseboden (81) eines Gehäuses (8) abgestützt ist, daß die andere plane Fläche (72) der Platte (7) dem Gehäuseboden (81) zugekehrt und in einem Abstand zu diesem Boden (81) angeordnet ist, daß der Empfänger(2) auf dem Gehäuseboden (81) abgestützt zwischen dem Gehäuseboden (81) und der Platte (7) angeordnet ist, daß der Sender (1) auf der einen vom Gehäuseboden (81) abgekehrten planen Fläche (71) der Platte (7) abgestützt angeordnet ist, und daß die Platte (7), die Linse (3), das Filter (5), der Sender (1) und der Empfänger (2) von einer mit dem Gehäuseboden (81) fest oder lösbar verbundenen Gehäuseabdeckung (82) des Gehäuses (8) abgedeckt sind, die eine Fensteröffnung (820) zum Durchgang der Strahlung der ersten Wellenlänge (λ₁) von der Linse (3) zum bestimmten Raumpunkt (40) und Durchgang der Strahlung der zweiten Wellenlänge (λ₂) vom bestimmten Raumpunkt (40) zur Linse (3) aufweist.

## Claims

1. Bidirectional optical transceiver arrangement, comprising
- an optical transmitter (1) with a transmitter window (10) for emitting optical radiation of a first wavelength (λ₁),
- an optical receiver (2) with a receiver window (20) for receiving optical radiation of a second wavelength (λ₂), which eminates from a specific point in space (40) which is at a distance both from the transmitter window (10) and from the receiver window (20), and
- a single planar convex optical lens (3) with a convex lens surface (32) facing both the transmitter window (10) and the specific point in space (40), and a plane lens surface (31) facing the receiver window (20), and
- a wavelength-selective optical filter (5) which is constructed on the plane lens surface (31) and is opaque to the first wavelength (λ₁) and transparent only to the second wavelength (λ₂), it being the case that
the transmitter (1), the specific point in space (40), the receiver (2) and the lens (3) are arranged relative to one another in such a way, and the lens (3) is dimensioned such that
- the transmitter window (10) is projected onto the specific point in space (40) solely by the lens (3) with reflection of the radiation of the first wavelength (λ₁) at the plane lens surface (31), and
- the specific point in space (40) is projected onto the receiver window (20) solely by the lens (3), with passage of the radiation of the second wavelength (λ₂) through the plane lens surface (31) and the filter (5).

2. Arrangement according to Claim 1, in which
- the convex lens surface (32) is part of a spherical surface whose centre (320) lies essentially on the plane lens surface (31), and in which
- the transmitter (1), the receiver (2), the lens (3) and the point in space (40) are arranged relative to the one another in such a way that an axial beam (11) of the radiation of the first wavelength (λ₁) emitting from the transmitter window (10), and an axial beam (21) of the radiation of the second wavelength (λ₂) emitting from the point in space (40) in each case impinge perpendicularly on the spherical convex lens surface (32).

3. Arrangement according to Claim 1 or 2, in which the optical transmitter (1) comprises a laser diode having a strip-type optical waveguide (122) which is integrated on a surface (121) of a substrate (12) and contains lasing material and which has an end face which faces the lens (3) and defines the transmitter window (10).

4. Arrangement according to Claim 3, in which the surface (121) of the substrate (12) is arranged perpendicular to a plane containing the axial beam (11), reflected at the plane lens surface (32), of the radiation of the first wavelength (λ₁).

5. Arrangement according to Claim 1 or 2, in which the receiver window (20) is arranged in a plane (22) which is parallel to the plane lens surface (31), and on which the axial beam (21), refracted at the plane lens surface (31), of the radiation of the second wavelength (λ₂) impinges obliquely.

6. Arrangement according to Claim 1 or 2, in which the receiver window (20) is arranged in a plane (22) which is perpendicular to a plane containing the axial beam (21) refracted at the plane lens surface (31), of the radiation of the second wavelength (λ₂).

7. Arrangement according to one of the preceding claims, in which the receiver window (20) is arranged in a plane (22) which is at an oblique angle to the plane lens surface (31) and on which the axial beam (21), refracted at the plane lens surface (31), of the second wavelength (λ₂) impinges obliquely.

8. Arrangement according to one of the preceding claims, in which the lens (3) is fastened on a plate (7) transparent to the radiation of the second wavelength (λ₂) in such a way that the plane lens surface (31) faces a plate surface (71) of this plate (7), and the filter (5) is located between this plane surface (71) of the plate (7) and the plane lens surface (31), and in that the receiver (2) is arranged opposite a plane surface (71) of the plate (7) which is averted from another plane surface (72) of the plate (7).

9. Arrangement according to Claim 8, in which the plate (7) is supported on a housing base (81) of a housing (8) in such a way that the other plane surface (72) of the plate (7) faces the housing base (81) and is arranged at a spacing from this base (81), that the receiver (2) is arranged, supported on the housing base (81), between the housing base (81) and the plate (7), that the transmitter (1) is arranged supported on the plane surface (71), averted from the housing base (81), of the plate (7), and that the plate (7), the lens (3), the filter (5), the transmitter (1) and the receiver (2) are covered by the housing cover (82) of the housing (8) which is connected permanently or detachably to the housing base (81) and has a window opening (820) for passage of the radiation of the first wavelength ((λ₁) from the lens (3) to the specific point in space (40), and for passage of the radiation of the second wavelength ((λ₂) from a specific point in space (40) to the lens (3).

## Revendications

1. Emetteur-récepteur optique bidirectionnel, composé de :
- un émetteur optique (1) présentant une fenêtre d'émetteur (10), pour émettre un rayonnement optique d'une première longueur d'onde (λ₁),
- un récepteur optique (2) présentant une fenêtre de récepteur (20) pour la réception d'un rayonnement optique d'une deuxième longueur d'onde (λ₂) qui est issu d'un certain point de l'espace (40), qui est éloigné aussi bien de la fenêtre d'émetteur (10) que de la fenêtre de récepteur (20), et
- une unique lentille optique plan-convexe (3) possédant une surface de lentille convexe (32) dirigée aussi bien vers la fenêtre d'émetteur (10) que vers le point déterminé de l'espace (40) et une surface de lentille plane (31) dirigée vers la fenêtre de récepteur (20) et
- un filtre optique (5), formé sur la surface de lentille plane (31), sélectif pour les longueurs d'onde, qui est opaque pour la première longueur d'onde (λ₁) et n'est transparente que pour la deuxième longueur d'onde (λ₂), dans lequel
l'émetteur (1), le point déterminé de l'espace (40), le récepteur (2) et la lentille (3) sont disposés les uns par rapport aux autres, et la lentille (3) est dimensionnée de manière à ce que
- une image de la fenêtre d'émetteur (10) est formée sur le point déterminé de l'espace (40) uniquement par la lentille (3), avec réflexion du rayonnement de la première longueur d'onde (λl₁) sur la surface de lentille plane (31), et
- une image du point déterminé de l'espace (40) est formé sur la fenêtre de récepteur (20) uniquement par la lentille (3), avec passage du rayonnement de la deuxième longueur d'onde (λ₂) à travers la surface de lentille plane (31) et à travers le filtre (5).

2. Dispositif selon la revendication 1, dans lequel
- la surface de lentille convexe (32) fait partie d'une surface sphérique dont le centre (320) se trouve sensiblement dans la surface de lentille plane (31), et
- l'émetteur (1), le récepteur (2), la lentille (3) et le point de l'espace (40) sont disposés les uns par rapport aux autres de telle manière qu'un rayon axial (11) du rayonnement de la première longueur d'onde (λ₁) issu de la fenêtre d'émetteur (10) et un rayon axial (21) du rayonnement de la deuxième longueur d'onde (λ₂) issu du point de l'espace (40) tombent chacun perpendiculairement sur la surface de lentille convexe de forme sphérique (32).

3. Dispositif selon la revendication 1 ou 2, dans lequel l'émetteur optique (1) est composé d'une diode laser avec un guide d'onde optique (122) en forme de bande, intégré sur une surface (121) d'un substrat (12) et contenant une matière compatible avec le laser, qui présente une surface terminale frontale dirigée vers la lentille (3) et définissant la fenêtre d'émetteur (10).

4. Dispositif selon la revendication 3, dans lequel la surface (121) du substrat (12) est disposée perpendiculairement à un plan qui contient le rayon axial (11) du rayonnement de la première longueur d'onde (λ₁) qui est réfléchi sur la surface de lentille plane (32).

5. Dispositif selon la revendication 1 ou 2, dans lequel la fenêtre de récepteur (20) est disposée dans un plan (22) qui est parallèle à la surface de lentille plane (31) et sur lequel le rayon axial (21) du rayonnement de la deuxième longueur d'onde (λ₂), qui est réfracté au niveau de la surface de lentille plane (31) tombe obliquement.

6. Dispositif selon la revendication 1 ou 2, dans lequel la fenêtre de récepteur (20) est disposée dans un plan (22) qui est perpendiculaire à un plan qui contient le rayon axial (21) du rayonnement de la deuxième longueur d'onde (λ₂) réfracté au niveau de la surface de lentille plane (31).

7. Dispositif selon une des revendications précédentes, dans lequel la fenêtre de récepteur (20) est disposée dans un plan (22) qui est disposé obliquement en formant un angle par rapport à la surface de lentille plane (31), et sur lequel le rayon axial (21) de la deuxième longueur d'onde (λ₂) réfracté au niveau de la surface de lentille plane (31) tombe obliquement.

8. Dispositif selon une des revendications précédentes, dans lequel la lentille (3) est fixée sur une plaque (7) transparente pour le rayonnement de la deuxième longueur d'onde (λ₂), de manière à ce que la surface de lentille plane (31) soit dirigée vers une surface plane (71) de cette plaque (7), et le filtre (5) se trouve entre cette surface plane (71) de la plaque (7) et la surface de lentille plane (31), et de manière à ce que le récepteur (2) soit disposé face à une autre surface plane (72) de la plaque (7) qui est à l'opposé de la première surface plane (71) de la plaque (7).

9. Dispositif selon la revendication 8, dans lequel la plaque (7) prend appui sur un fond (81) de boîtier d'un boîtier (8) de manière à ce que l'autre surface plane (72) de la plaque (7) soit dirigée vers le fond (81) de boîtier et soit disposée à une certaine distance de ce fond (81), à ce que le récepteur (2) prenne appui sur le fond (81) de boîtier et soit disposé entre le fond (81) du boîtier et la plaque (7), à ce que l'émetteur (1) soit disposé en appui sur la première surface plane (71) de la plaque (7) qui est à l'opposé du fond (81) de boîtier, et à ce que la plaque (7), la lentille (3), le filtre (5), l'émetteur (1) et le récepteur (2) soient recouverts par un capot (82) du boîtier (8) relié au fond (81) de boîtier de façon fixe ou séparable, qui présente une ouverture de fenêtre (820) pour le passage du rayonnement de la première longueur d'onde (λ₁) de la lentille (3) au point déterminé de l'espace (40) et pour le passage du rayonnement de la deuxième longueur d'onde (λ₂) du point déterminé de l'espace (40) à la lentille (3).
